# EUROPÄISCHE PATENTSCHRIFT

(11) **EP 3 659 768 B1**
(45) Veröffentlichungstag und Bekanntmachung des Hinweises auf die Patenterteilung: **15.05.2024**
(21) Anmeldenummer: 19209145.2
(22) Anmeldetag: 14.11.2019
(51) Int. Cl.: B27G 13/04, B27G 13/12

(54) **WERKZEUGKOPF ZUR BEARBEITUNG VON WERKSTÜCKEN BEI HOHEN ROTATIONSGESCHWINDIGKEITEN**
TOOL HEAD FOR MACHINING OF WORKPIECES BY HIGH ROTATIONSPEED
TÊTE D'OUTIL POUR L'USINAGE À GRANDE VITESSE DE PIÈCES

(30) Priorität: 14.11.2018 AT 510022018
(43) Veröffentlichungstag der Anmeldung: 03.06.2020
(73) Patentinhaber: Aigner Werkzeuge Gesellschaft m.b.H., 4715 Taufkirchen (AT)
(72) Erfinder: Steiner, Gerhard, 4720 Kallham (AT); Kienbauer, Josef, 4720 Kallham (AT)
(74) Vertreter: Hübscher & Partner Patentanwälte GmbH

(56) Entgegenhaltungen:
- WO-A2-2015/157871
- CH-A1- 713 020
- DE-U1- 9 403 695
- FR-A- 515 942

## Beschreibung

Die Erfindung bezieht sich auf einen Werkzeugkopf zur Bearbeitung von

Werkstücken bei hohen Rotationsgeschwindigkeiten, gemäß Anspruch 1. Ein solcher Werkzeugkopf ist aus dem Dokument WO 2015/157871 A2 bekannt.

Aus dem Stand der Technik sind Werkzeugköpfe zur Bearbeitung von Werkstücken bei hohen Rotationsgeschwindigkeiten bekannt (CH 713020 A1, DE 102014015199 A1), die einen um eine Achse drehbaren, beispielsweise zylinder-, kegelförmigen oder profilierten Grundkörper aufweisen. Der Grundkörper bildet dabei gemeinsam mit einer Spannbacke eine radial nach außen verlaufende Aufnahme für ein Messer, das eine in axialer Richtung, also quer zur Einführrichtung des Messers, verlaufende Positioniernut zum Eingriff einer in eine Aufnahmenut des Grundkörpers einführbare Positionierfeder (CH 713020 A1) bzw. eine als Teil des Grundkörpers ausgebildete Positionierfeder (DE 102014015199 A1) umfasst. Um die durch den Betrieb entstehenden Fliehkräfte aufnehmen zu können und somit ein fliehkraftbedingtes Herausschleudern des Messers aus der Aufnahme zu verhindern, bilden die beiden in axialer Richtung verlaufenden Seitenflächen der Positionierfeder jeweils einen Anschlag für die sowohl radial innenliegende, als auch für die radial außenliegende Wand der Positioniernut. Nachteilig ist daran allerdings, dass sich beim Spannvorgang die Positioniernut des vorpositionierten Messers zufolge der Schließbewegung der Spannbacke, die im Fall der DE 102014015199 A1 beispielsweise um einen fixen, durch einen formschlüssig in eine Grundkörperausnehmung eingreifenden Fuß der Spannbacke gebildeten Schwenkachse rotiert, auf unvorteilhafte Weise gegenüber der Positionierfeder verkeilen kann, sodass Eigenspannungen der zueinander verklemmten Bauteile einen sicheren Sitz des Messers in der Aufnahme verhindern, wodurch ein Herauslösen des Messers sowohl während des Betriebes als auch bereits während des Spannvorganges möglich ist. Vor diesem Hintergrund muss bei aus dem Stand der Technik bekannten Werkzeugköpfen insbesondere auf eine verklemmungsfreie Positionierung des Messers während des Spannvorganges geachtet werden, sodass sich die regelmäßig erforderlichen Messerwechsel als äußerst zeitaufwendig erweisen. Hinzu kommt, dass je nach Vorrichtung und Anwendungsfall der Werkzeugkopf bzw. die Messeraufnahme auch an besonders schwer sichtbaren Stellen verbaut sein kann, wodurch sich der Messerwechsel noch schwieriger gestaltet.

Darüber hinaus können thermische Verspannungen der miteinander verbundenen bzw. zusammenwirkenden Werkzeugteile zufolge der sich schnittkraftbedingt einstellenden hohen Wärmeentwicklung auftreten, die ebenfalls ein Verklemmen der Werkzeugteile zueinander bewirken, sodass bei den Messerwechseln mitunter hohe Standzeiten zur Abkühlung der zueinander verspannten Bauteile in Kauf genommen werden müssen.

Der Erfindung liegt somit die Aufgabe zugrunde, einen Werkzeugkopf der eingangs geschilderten Art so auszugestalten, dass trotz betrieblich bedingter thermischer Verspannungen der Werkzeugteile ein rascher und einfach vorzunehmender Messerwechsel erfolgen kann und gleichzeitig ein sicherer Sitz des Messers in der Aufnahme trotz hoher Rotationsgeschwindigkeiten ermöglicht wird.

Die Erfindung löst die gestellte Aufgabe dadurch, dass das Messer ausschließlich eine Positionierfläche bildet, die in Auszugsrichtung mit einem Positionieranschlag einer Positionierfeder des Grundkörpers zusammenwirkt und dass zum Spannen ein Vorspannelement zum Andrücken des Messers auf die Positionierfeder und gegen deren Positionieranschlag vorgesehen ist.

Zufolge dieser Merkmale können die Positionierung des Messers und der Spannvorgang in einem Schritt erfolgen, weil der kraftschlüssige Spannvorgang nicht wie beim Stand der Technik üblich im Anschluss an eine formschlüssige Vorpositionierung des Messers in der Aufnahme erfolgt, sondern das Messer vor dem in Auszugsrichtung, also radial nach außen, wirkenden Reibschluss frei beweglich bleibt. Um dennoch eine definierte Spannposition zu erreichen bildet das Messer ausschließlich eine Positionierfläche, die in Auszugsrichtung mit einem Positionieranschlag einer Positionierfeder des Grundkörpers zusammenwirkt. Vor dem Reibschluss und während des Spannvorganges wird diese Positionierfläche der Positioniernut zufolge der Kraftwirkung des Vorspannelementes auf das Messer gegen den Positionieranschlag gedrückt, sodass beim Erreichen des Reibschlusses eine vordefinierte Lage des Messers erreicht werden kann. Umgekehrt muss beim Einsetzen des Messers in die Aufnahme keine formschlüssige Vorpositionierung gegenüber zwei in Einführ- bzw. Auszugsrichtung gegenüberliegenden Positionieranschläge erfolgen, sondern der der Schneide gegenüberliegende Endabschnitt des Messers muss lediglich so über die Positionierfeder geschoben werden, dass die Positionierfläche des Messers, die beispielsweise über eine Stufe bzw. einen Absatz auf der der Positionierfeder zugewandten Messerseite gebildet werden kann, den Positionieranschlag der Positionierfeder hintergreift. Dadurch wird einerseits das Messer in Auszugsrichtung gesichert und bleibt anderseits in Einführrichtung verschiebbar. Damit ein sicheres Hintergreifen der Positionierfeder durch die Positionierfläche des Messers sichergestellt wird, ist das Vorspannelement so ausgebildet, dass es das Messer während des Spannvorganges nicht nur gegen den Positionieranschlag, sondern auch auf die Positionierfeder drückt. Insgesamt kann das Vorspannelement damit auch die bei thermischen Verspannungen der einzelnen Werkzeugkopfbauteile auftretenden Maßänderungen bzw. die sich dadurch einstellenden Kräfte ausgleichen, wodurch ein Verklemmen der einzelnen Bauteile, insbesondere des Messers mit der Positionierfeder und / oder der Spannbacke vermieden wird und längere Standzeiten zur Auskühlung der beanspruchten Bauteile beim Messerwechsel entfallen. Erfindungsgemäß ragt das Vorspannelement bei geöffneter Spannbacke so in die Aufnahme, dass der Endabschnitt des Messers an einem weiteren Einführen über das Vorspannelement hinaus gehindert wird und das Vorspannelement dennoch beim Spannvorgang das Messer auf die Positionierfeder drückt. Auf einfache Weise kann das Vorspannelement demnach durch eine Rückstellfeder oder einen Federstift gebildet werden, der mit einem kegelstumpfförmigen Kopfende bei offener Spannbacke in die Aufnahme ragt. Für einen besonders günstigen Spannvorgang kann die Positionierfeder grundkörperseitig angeordnet sein. Beispielsweise kann der Grundkörper eine formschlüssige Aufnahmenut für eine darin einsetzbare Positionierfeder bilden, sodass auf der dem Messer zugewandten Seite der Positionierfeder der Positionieranschlag in die Aufnahme ragt. Gemäß einigen Ausführungsformen kann aber auch der Grundkörper gemeinsam mit der Positionierfeder einstückig ausgebildet sein.

Um sowohl besonders günstige konstruktive Bedingungen als auch Positionier- und Spannbedingungen zu ermöglichen, kann das Messer eine in axialer Richtung verlaufende Positioniernut zum Eingriff der Positionierfeder umfassen, wobei die Positionierfeder ausschließlich einen Positionieranschlag für die radial innenliegende Wand der Positioniernut als Positionierfläche bildet.

Obwohl ein Formschluss der radial außenliegenden Wand der Positioniernut mit der entsprechend gegenüberliegenden Wand der Positionierfeder gänzlich entfallen kann, indem die Positioniernut beispielsweise breiter als die Positionierfeder ausgebildet wird, können die Vorteile eines Formschlusses ohne zweiten Positionieranschlag weiterhin genützt werden, wenn die radial außenliegende Wand der Positionierfeder eine in Einführrichtung, also radial nach innen ansteigende Anlauffläche für den der Schneide gegenüberliegenden Endabschnitt des Messers bildet. Dies hat den weiteren Vorteil, dass der Messerwechsel auch bei schlechter Sichtbarkeit der Messeraufnahme sicher erfolgen kann, weil der der Schneide gegenüberliegende Endabschnitt des Messers beim Einführen in die Aufnahme an die Anlauffläche stößt und dabei über die Positionierfeder angehoben wird, sodass diese bei einem weiteren Einführen in die Positioniernut des Messers eingreift, da das Vorspannelement insbesondere auch den Endabschnitt des Messers gegen die Positionierfeder drückt. Dadurch, dass sich das Hintergreifen des Positionieranschlages durch die entsprechende Nutenwand zudem als taktiles Feedback bemerkbar macht, kann ein rascher Messerwechsel auch ohne direkte Sicht auf das Messer sowie die Messeraufnahme erfolgen. Grundsätzlich kann die Anlauffläche der Positionierfeder unterschiedliche und von der Positioniernut unabhängige Formen aufweisen. Gerade in Hinblick auf den oben erwähnten Formschluss ist es allerdings vorteilhaft, wenn die Positionierfeder mit ihrer in Einführrichtung ansteigenden Anlauffläche im Achsquerschnitt ein Negativprofil zur Positioniernut aufweist. Klarstellend sei angemerkt, dass im Allgemeinen die radiale Einführ- bzw. Auszugsrichtung nicht unbedingt die Rotationsachse des Grundkörpers schneiden muss, sondern auch geneigt verlaufen kann, sodass sich eine tangentiale Anstellung des Messers ergibt.

Besonders günstige Spannbedingungen ergeben sich beispielsweise, wenn das Vorspannelement der Spannbacke zugeordnet ist. Das Vorspannelement kann demnach als in die Spannbacke eingesetzter und aus dieser beim Spannvorgang in die Aufnahme ragender Federstift ausgebildet sein, dessen Wirkungslinie quer zur Einführ- bzw. Auszugsrichtung des Messers verläuft, also in Richtung der durch die Kontaktfläche zwischen Messer und Spannbackenoberseite gebildeten Flächennormale. Dadurch wird erreicht, dass sowohl ein eine Zwangskraft auf das Messer ausübender Anschlag durch den Andrückabschnitt des Vorspannelementes gebildet wird, der das Messer während des Betriebes an einem weiteren Nachgeben in Einführrichtung zufolge der durch etwaige Zustellbewegungen des Werkzeugkopfes entstehenden Kraftkomponenten verhindert, als auch ein zur Kompensation von thermischen Verspannungen notwendiger Toleranzausgleich bei gleichzeitigem Festspannen des Messers an den Grundkörper durch das nachgebende Vorspannelement erfolgen kann.

Konstruktiv günstige Bedingungen sowie ein geringerer Bauteilbedarf ergeben sich, wenn die Spannbacke gemeinsam mit dem ihr zugeordneten Vorspannelement einstückig ausgebildet ist. Vorzugsweise kann die dem Messer in Einbaulage zugewandte Seite der Spannbacke eine Materialaussparung unter Ausbildung eines Vorspannelementes aufweisen, welches ein freies Kopfende mit einem Andrückabschnitt für das Messer und eine spannbackenseitige Verbindungsstelle umfasst. Um eine zuverlässige Vorspannfunktion zu ermöglichen, kann sich das dadurch gebildete Vorspannelement von dessen freien Kopfende zur spannbackenseitigen Verbindungsstelle hin verjüngen, sodass eine für den Vorspannvorgang günstige Federsteifigkeit des Vorspannelementes erreicht wird.

Um die Maßhaltigkeit des Werkzeuges sicherzustellen und ein ungleichmäßiges Schnittbild zu vermeiden, kann der Grundkörper eine radial nach außen verlaufende, mit einem Rückstellelement zusammenwirkende Anlaufschräge zur Verlagerung der Spannbacke gegen die Positionierfeder des Grundkörpers bilden. Das Rückstellelement kann dabei so ausgebildet sein, dass es beim Spannvorgang die Spannbacke zuerst radial nach innen gegen die Anlaufschräge des Grundkörpers drückt, wonach eine mit der Anlaufschräge in Kontakt stehende Anlauffläche bzw. Fase der Spannbacke entlang der Anlaufschräge radial nach außen verlagert wird, wodurch das Messer zufolge der zwischen diesem und der Spannbacke auftretenden Reibkräfte zusätzlich zum Vorspannelement gegen den Positionieranschlag gedrückt und in seiner Position festgelegt wird. Zufolge dieser Maßnahmen kann beim Messerwechsel eine zuverlässige Positionierung und ein fester Sitz des Messers noch weiter verbessert und dadurch während des Betriebes schnittkraftunabhängig ein gleichmäßiges Schnittbild erzielt werden.

Gemäß einigen Ausführungsformen kann das Rückstellelement der Spannbacke zugeordnet sein, wobei das Rückstellelement beim Spannvorgang gegen eine radial nach innen zeigende Anschlagsfläche des Grundkörpers federnd abgestützt ist. Um vor diesem Hintergrund sowohl einen zuverlässigen Spannvorgang als auch günstige Fertigungsbedingungen zu ermöglichen, kann das Rückstellelement am Grund einer Vertiefung der Spannbacke angesetzt und von der in Auszugsrichtung vorgelagerten Mantelfläche der Vertiefung zur Ausbildung eines Federweges beabstandet sein. Die Spannbacke kann damit auf einfache Weise so vorgefertigt sein, dass diese bereits vor dem Zusammenbau mit dem Grundkörper und dem Messer das Rückstellelement aufweist. Zufolge dieser Merkmale bietet die Vertiefung der Spannbacke einen Ausgleichsbereich für das Rückstellelement, sodass ein zuverlässiger Spannvorgang erfolgen kann. Vorzugsweise kann das Rückstellelement sowohl von der in Auszugsrichtung vorgelagerten als auch nachgelagerten Mantelfläche der Vertiefung beabstandet sein, sodass durch die damit verbundene Materialschwächung des Rückstellelementes ein günstiger Federweg und somit günstige Spannbedingungen erzielt werden. Insgesamt kann durch diese Merkmale eine effizientere Fertigung des Werkzeugkopfes erfolgen, weil zur Montage eines Rückstellelementes die in der Regel schwer zugängliche Aufnahme innerhalb des Grundkörpers nicht aufwändig nachbearbeitet werden muss.

Um den Spannvorgang weiter zu verbessern, kann das Rückstellelement in eine entlang einer Spannschraubenbohrung bzw. eines Spannschraubenbohrungsabschnittes des Grundkörpers verlaufende Ausnehmung eingesetzt sein. Dabei können auch mehrere Rückstellelemente vorgesehen sein. Zufolge dieser Maßnahmen liegt das Rückstellelement so an der Spannschraube an, dass beim Festziehen der Spannschraube der Spannvorgang eingeleitet wird, indem das eine oder die mehreren Rückstellelemente die Spannschraube zunächst gegen einen Anschlag der Spannbacke drücken. In weiterer Folge drückt die Spannbacke radial nach innen gegen die Anlaufschräge des Grundkörpers, wonach der weitere Spannvorgang, wie oben bereits näher ausgeführt, erfolgen kann.

Um eine hohe Funktionalität bei einfachen Fertigungsbedingungen zu ermöglichen, wird vorgeschlagen, dass das Rückstellelement aus einem elastischen Material gefertigt ist. Beispielsweise kann das Rückstellelement als Gummipuffer ausgebildet sein, der in eine entsprechende Aufnahmebuchse bzw. Ausnehmung in der Spannbacke oder im Grundkörper eingesetzt ist.

In der Zeichnung ist der Erfindungsgegenstand beispielsweise dargestellt. Es zeigen
- Fig. 1: eine schematische perspektivische Darstellung eines erfindungsgemäßen Werkzeugkopfes in einer ersten Ausführungsform,
- Fig. 2: einen Detailschnitt einer erfindungsgemäßen Messeraufnahme bei geöffneter Spannbacke in einem größeren Maßstab,
- Fig. 3: eine der Fig. 2 entsprechende Ansicht bei geschlossener Spannbacke und
- Fig. 4: eine der Fig. 3 entsprechende Ansicht einer weiteren Ausführungsform eines erfindungsgemäßen Werkzeugkopfes.

Ein erfindungsgemäßer Werkzeugkopf zur Bearbeitung von Werkstücken bei hohen Rotationsgeschwindigkeiten weist einen um eine Achse 1 drehbaren Grundkörper 2 auf. Der Grundkörper 2 bildet gemeinsam mit einer Spannbacke 3 eine radial nach außen verlaufende Aufnahme 4 für den der Schneide 5 gegenüberliegenden Endabschnitt 6 eines Messers 7, das eine in Richtung der Achse 1 verlaufende Positioniernut 8 zum Eingriff einer Positionierfeder 9 umfasst.

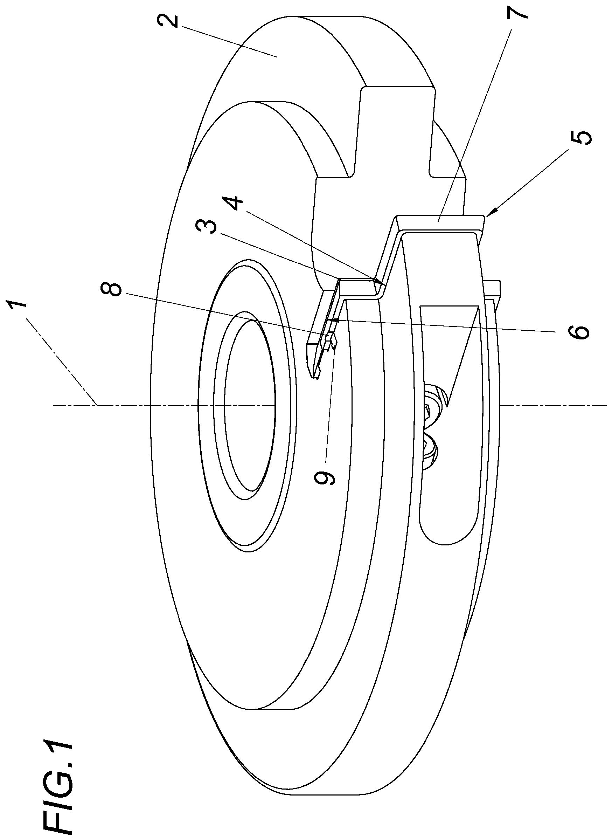

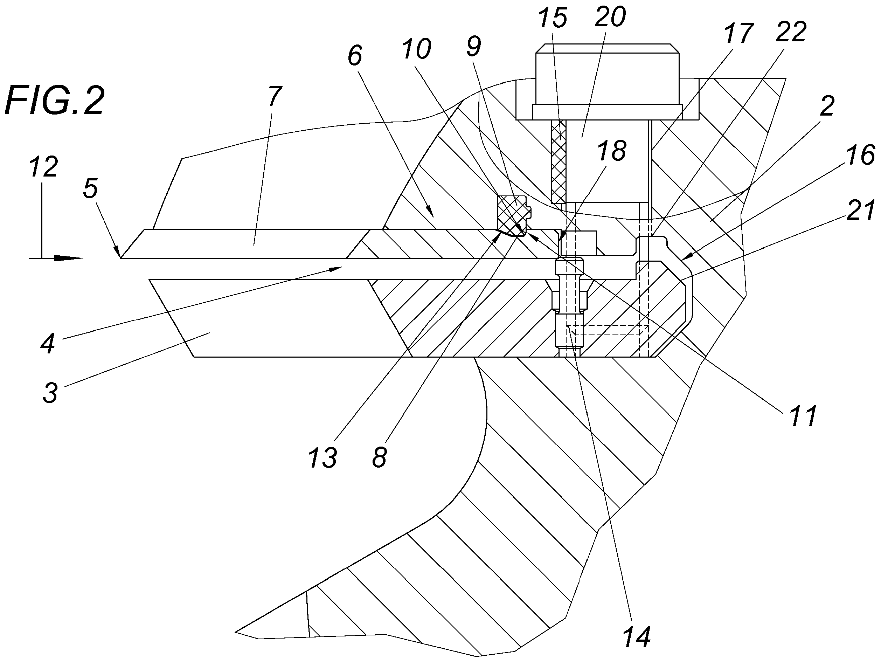

Wie der Fig. 2 zu entnehmen ist, bildet die Positionierfeder 9 ausschließlich einen Positionieranschlag 10 für die radial innenliegende Wand der Positioniernut 8 als Positionierfläche 11. In der in den Fig. 1 bis 3 gezeigten Ausführungsform ist die Positionierfeder 9 in eine Aufnahmenut des Grundkörpers 2 eingesetzt, wobei der Positionieranschlag 10 auf der dem Messer 7 zugewandten Seite der Positionierfeder 9 in die Aufnahme 4 ragt.

Um den Messerwechsel insbesondere bei einer schlechten Sichtbarkeit der Aufnahme 4 möglichst einfach zu gestalten, bildet die Positionierfeder 9 eine in Einführrichtung 12 ansteigende Anlauffläche 13 für den der Schneide 5 gegenüberliegenden Endabschnitt 6 des Messers 7.

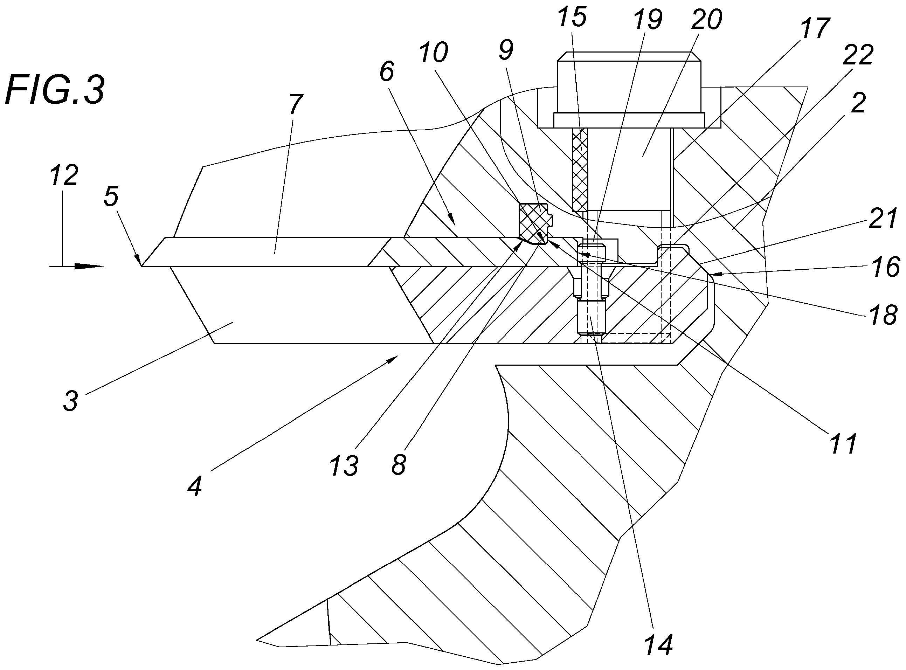

Der Werkzeugkopf weist zudem ein Vorspannelement 14 auf, welches in der in den Fig. 1 bis 3 gezeigten Ausführungsform als Federstift ausgebildet und der Spannbacke 3 zugeordnet ist. Wie insbesondere aus den Fig. 2 und 3 ersichtlich ist, bildet der Grundkörper 2 eine radial nach außen verlaufende, mit einem oder mehreren Rückstellelementen 15 zusammenwirkende Anlaufschräge 16 zur Verlagerung der Spannbacke 3 gegen die Positionierfeder 9 während des Spannvorganges. Die in den. Fig. 2 und 3 gezeigte Ausführungsform weist beispielsweise zylindrische Gummistifte als Rückstellelemente 15 auf, die in entsprechende, entlang einer Spannschraubenbohrung 17 verlaufende Ausnehmungen des Grundkörpers 2 eingesetzt sind. Das Vorspannelement 14 verhindert über einen als zusätzlichen Anschlag gegenüber dem Messerrücken 18 vorgesehenen, kegelstumpfförmigen Andrückabschnitt 19 ein weiteres Nachrutschen des Messers 7 in Einführrichtung 12. Ebenso wird durch das nachgebende Vorspannelement 14 ein Toleranzausgleich bei etwaigen betriebsbedingten thermischen Verspannungen ermöglicht. Das Vorspannelement 14 kann grundsätzlich unterschiedliche Ausgestaltungsvarianten aufweisen, wobei sichergestellt werden muss, dass der Endabschnitt 6 des Messers 7 an einem weiteren Einführen über das Vorspannelement 14 hinaus gehindert wird und das Vorspannelement 14 dennoch beim Spannvorgang das Messer 7 auf die Positionierfeder 9 drückt.

Beim Spannvorgang drücken die Rückstellelemente 15 die für den Fachmann bekannte, in eine entsprechende Gewindebohrung der Spannbacke 3 eingreifende Spannschraube 20 und damit die Spannbacke 3 zuerst radial nach innen gegen die Anlaufschräge 16 des Grundkörpers 2. Dadurch, dass die gegen den Grundkörper 2 abgestützten Rückstellelemente 15 beispielsweise aus Gummi oder einem anderen elastischen Material gefertigt sein können, werden diese beim Spannvorgang lokal komprimiert, um so die Spannbacke 3 zufolge der Rückstellkraft der Rückstellelemente 15 mittels der Spannschraube 20 an die Anlaufschräge 16 zu pressen.

Im weiteren Verlauf des Spannvorganges wird eine mit der Anlaufschräge 16 in Kontakt stehende Anlauffläche bzw. Fase 21 der Spannbacke 3 entlang der Anlaufschräge 16 in Richtung Positionieranschlag 10 verlagert, wodurch einerseits die Spannbacke 3 eine Ausnehmung 22 des Grundkörpers hintergreift und andererseits das Messer 7 zufolge der zwischen diesem und der Spannbacke 3 auftretenden Reibkräfte sowie zufolge des Vorspannelementes 14 gegen den Positionieranschlag 10 gedrückt und in seiner Betriebsposition festgelegt und stabilisiert wird, wie dies in Fig. 3 dargestellt ist.

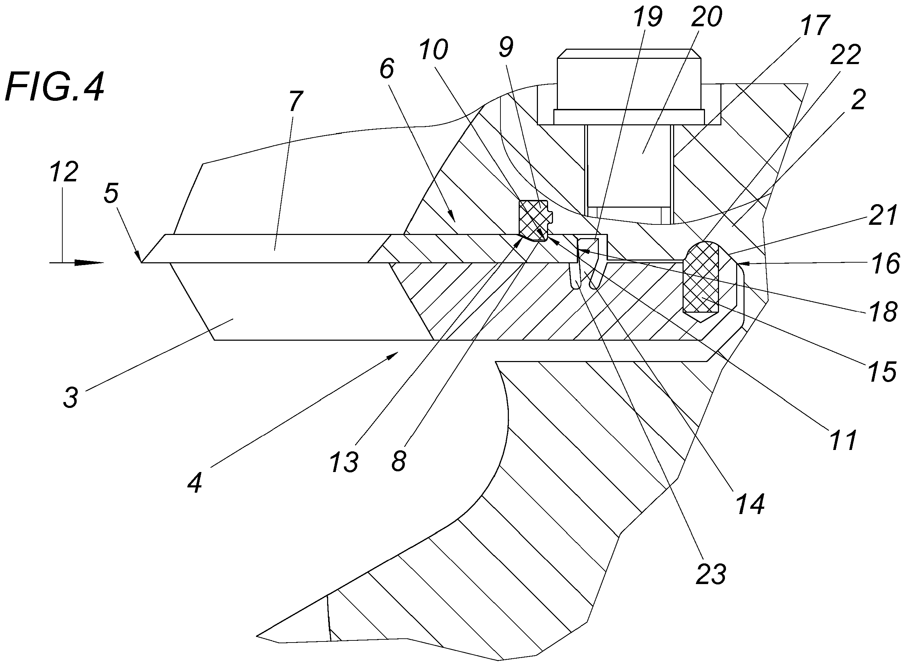

Fig. 4 zeigt einen Detailschnitt einer erfindungsgemäßen Messeraufnahme in einer weiteren Ausführungsform bei geschlossener Spannbacke 3. Die Spannbacke 3 und das Vorspannelement 14 sind dabei einstückig ausgebildet. Die dem Messer 7 in Einbaulage zugewandte Seite der Spannbacke 3 kann eine Materialaussparung 23 unter Ausbildung eines Vorspannelementes 14 aufweisen, welches ein freies Kopfende mit einem Andrückabschnitt 19 für das Messer 4 und eine spannbackenseitige Verbindungsstelle umfasst. Um eine zuverlässige Vorspannfunktion zu ermöglichen, kann sich das dadurch gebildete Vorspannelement 14 von dessen freien Kopfende zur spannbackenseitigen Verbindungsstelle hin verjüngen, sodass eine für den Vorspannvorgang günstige Federsteifigkeit des Vorspannelementes erreicht wird.

Die in Fig. 4 gezeigte Ausführungsform weist zudem ein Rückstellelement 15 auf, das am Grund einer Vertiefung der Spannbacke 3 angesetzt und von der in Auszugsrichtung vorgelagerten Mantelfläche der Vertiefung zur Ausbildung eines Federweges beabstandet ist.

## Patentansprüche

1. Werkzeugkopf zur Bearbeitung von Werkstücken bei hohen Rotationsgeschwindigkeiten, mit einem um eine Achse (1) drehbaren Grundkörper (2), der gemeinsam mit einer Spannbacke (3) eine radial nach außen verlaufende Aufnahme (4) für den der Schneide (5) gegenüberliegenden Endabschnitt (6) eines Messers (7) bildet, wobei das Messer (7) ausschließlich eine Positionierfläche (11) bildet, die in Auszugsrichtung mit einem Positionieranschlag (10) einer Positionierfeder (9) des Grundkörpers (2) so zusammenwirkt, dass die ausschließlich eine Positionierfläche (10) des Messers (7) den Positionieranschlag (10) der Positionierfeder (9) derart hintergreift, dass einerseits das Messer (7) in Auszugsrichtung gesichert ist und anderseits vor dem in Auszugsrichtung wirkenden Reibschluss in Einführrichtung verschiebbar bleibt, und dass zum Spannen ein Vorspannelement (14) zum Andrücken des Messers (7) auf die Positionierfeder (9) und gegen deren Positionieranschlag (10) vorgesehen ist, wobei das Vorspannelement (14) bei geöffneter Spannbacke (3) so in die Aufnahme (4) ragt, dass der Endabschnitt (6) des Messers (7) an einem weiteren Einführen über das Vorspannelement (14) hinaus gehindert wird und das Vorspannelement (14) dennoch beim Spannvorgang das Messer (7) auf die Positionierfeder (9) drückt.

2. Werkzeugkopf nach Anspruch 1, **dadurch gekennzeichnet, dass** das Messer (7) eine in axialer Richtung verlaufende Positioniernut (8) zum Eingriff der Positionerfeder (9) umfasst, wobei die Positionierfeder (9) ausschließlich einen Positionieranschlag (10) für die radial innenliegende Wand der Positioniernut (8) als Positionierfläche (11) bildet.

3. Werkzeugkopf nach Anspruch 1 oder 2, **dadurch gekennzeichnet, dass** die Positionierfeder (9) eine in Einführrichtung (12) ansteigende Anlauffläche (13) für den der Schneide (5) gegenüberliegenden Endabschnitt (6) des Messers (7) bildet.

4. Werkzeugkopf nach einem der Ansprüche 1 bis 3, **dadurch gekennzeichnet, dass** das Vorspannelement (14) der Spannbacke (3) zugeordnet ist.

5. Werkzeugkopf nach Anspruch 4, **dadurch gekennzeichnet, dass** die Spannbacke (3) und das Vorspannelement (14) einstückig ausgebildet sind.

6. Werkzeugkopf nach einem der Ansprüche 1 bis 5, **dadurch gekennzeichnet, dass** der Grundkörper (2) eine radial nach außen verlaufende, mit einem Rückstellelement (15) zusammenwirkende Anlaufschräge (16) zur Verlagerung der Spannbacke (3) gegen die Positionierfeder (9) des Grundkörpers (2) bildet.

7. Werkzeugkopf nach Anspruch 6, **dadurch gekennzeichnet, dass** das Rückstellelement (15) in eine entlang einer Spannschraubenbohrung (17) des Grundkörpers (2) verlaufende Ausnehmung eingesetzt ist.

8. Werkzeugkopf nach Anspruch 6, **dadurch gekennzeichnet, dass** das Rückstellelement (15) am Grund einer Vertiefung der Spannbacke (3) angesetzt und von der in Auszugsrichtung vorgelagerten Mantelfläche der Vertiefung zur Ausbildung eines Federweges beabstandet ist.

9. Werkzeugkopf nach einem der Ansprüche 6 bis 8, **dadurch gekennzeichnet, dass** das Rückstellelement (15) aus einem elastischen Material gefertigt ist.

## Claims

1. Tool head for machining workpieces at high rotational speeds, having a base body (2) which can rotate about an axis (1) and which, together with a clamping jaw (3), forms a radially outwardly extending receptacle (4) for the end section (6) of a blade (7) opposite the cutting edge (5), wherein the blade (7) forms exactly one positioning surface (11) which interacts in the pull-out direction with a positioning stop (10) of a positioning key (9) of the base body (2) in such a way that the positioning surface (11) of the blade (7) engages behind the positioning stop (10) of the positioning key (9) in such a way, that, on the one hand, the blade (7) is secured in the pull-out direction, and, on the other hand, the blade (7) remains displaceable in the insertion direction before the frictional connection acts in the pull-out direction, and that a pretensioning element (14) for pressing the blade (7) onto the positioning key (9) and against its positioning stop (10) is provided for tensioning, wherein the pretensioning element (14) projects into the receptacle (4) when the clamping jaw (3) is open such that the end section (6) of the blade (7) is prevented from being inserted further beyond the pretensioning element (14) and the pretensioning element (14) nevertheless presses the blade (7) onto the positioning key (9) during the clamping process.

2. Tool head according to claim 1, **characterized in that** the blade (7) comprises a positioning groove (8) extending in the axial direction for engagement of the positioning key (9), the positioning key (9) forming exactly one positioning stop (10) for the radially inner wall of the positioning groove (8) as a positioning surface (11).

3. Tool head according to claim 1 or 2, **characterized in that** the positioning key (9) forms a contact surface (13) sloping upwards in the direction of insertion (12) for the end section (6) of the blade (7) opposite the cutting edge (5).

4. Tool head according to one of claims 1 to 3, **characterized in that** the pretensioning element (14) is assigned to the clamping jaw (3).

5. Tool head according to claim 4, **characterized in that** the clamping jaw (3) and the pretensioning element (14) are formed in one piece.

6. Tool head according to one of claims 1 to 5, **characterized in that** the base body (2) forms a radially outwardly extending starting bevel (16) cooperating with a return element (15) for displacing the clamping jaw (3) against the positioning key (9) of the base body (2).

7. Tool head according to claim 6, **characterized in that** the return element (15) is inserted into a recess running along a clamping screw bore (17) of the base body (2).

8. Tool head according to claim 6, **characterized in that** the return element (15) is attached to the base of a recess in the clamping jaw (3) and, in order to form a spring travel, is spaced from the lateral surface of the recess, which lateral surface is located in front of the return element (15) in the pull-out direction.

9. Tool head according to one of claims 6 to 8, **characterized in that** the return element (15) is made of an elastic material.

## Revendications

1. Tête d'outil pour l'usinage de pièces à des vitesses de rotation élevées, comprenant un corps de base (2) qui peut tourner autour d'un axe (1), qui forme, conjointement avec une mâchoire de serrage (3), un logement (4) s'étendant radialement vers l'extérieur pour la partie d'extrémité (6) d'une lame (7) opposée au tranchant (5), la lame (7) formant exclusivement une surface de positionnement (11) qui, dans la direction d'extraction, coopère avec une butée de positionnement (10) d'un ressort de positionnement (9) du corps de base (2) de telle sorte que la surface de positionnement (10) de la lame (7), qui est exclusivement une surface de positionnement, s'engage derrière la butée de positionnement (10) du ressort de positionnement (9) de telle sorte, que, d'une part, la lame (7) soit sécurisée dans la direction d'extraction et que, d'autre part, elle reste déplaçable dans la direction d'introduction avant le blocage par friction agissant dans la direction d'extraction, et que, pour le serrage, un élément de précontrainte (14) est prévu pour presser la lame (7) sur le ressort de positionnement (9) et contre sa butée de positionnement (10), dans laquelle l'élément de précontrainte (14) fait saillie à l'intérieur du logement (4) lorsque la mâchoire de serrage (3) est ouverte, de telle sorte que la partie d'extrémité (6) de la lame (7) soit empêchée de s'introduire davantage au-delà de l'élément de précontrainte (14) et que l'élément de précontrainte (14) presse cependant la lame (7) sur le ressort de positionnement (9) pendant le processus de serrage.

2. Tête d'outil selon la revendication 1, **caractérisée en ce que** la lame (7) présente une rainure de positionnement (8) qui s'étend dans la direction axiale pour l'engagement du ressort de positionnement (9), dans laquelle le ressort de positionnement (9) forme exclusivement une butée de positionnement (10) pour la paroi radialement intérieure de la rainure de positionnement (8) faisant office de surface de positionnement (11).

3. Tête d'outil selon la revendication 1 ou 2, **caractérisée en ce que** le ressort de positionnement (9) forme une surface de butée ascendante (13) dans la direction d'insertion (12) pour la partie d'extrémité (6) de la lame (7) opposée au tranchant (5).

4. Tête d'outil selon l'une quelconque des revendications 1 à 3, **caractérisée en ce que** l'élément de précontrainte (14) est associé à la mâchoire de serrage (3).

5. Tête d'outil selon la revendication 4, **caractérisée en ce que** la mâchoire de serrage (3) et l'élément de précontrainte (14) sont formés d'une seule pièce.

6. Tête d'outil selon l'une quelconque des revendications 1 à 5, **caractérisée en ce que** le corps de base (2) forme une rampe de démarrage (16) qui s'étend radialement vers l'extérieur et qui coopère avec un élément de rappel (15) pour déplacer la mâchoire de serrage (3) contre le ressort de positionnement (9) du corps de base (2).

7. Tête d'outil selon la revendication 6, **caractérisée en ce que** l'élément de rappel (15) est inséré à l'intérieur d'un évidement qui s'étend le long d'un alésage de vis de serrage (17) du corps de base (2).

8. Tête d'outil selon la revendication 6, **caractérisée en ce que** l'élément de rappel (15) est placé au fond d'une cavité de la mâchoire de serrage (3) et est espacé de la surface d'enveloppe de la cavité, placée en amont dans la direction d'extraction, de manière à former une course élastique.

9. Tête d'outil selon l'une quelconque des revendications 6 à 8, **caractérisée en ce que** l'élément de rappel (15) est fabriqué à partir d'un matériau élastique.
